# EUROPÄISCHE PATENTSCHRIFT

(11) **EP 2 807 097 B1**
(45) Veröffentlichungstag und Bekanntmachung des Hinweises auf die Patenterteilung: **01.02.2017**
(21) Anmeldenummer: 12813889.8
(22) Anmeldetag: 28.12.2012
(51) Int. Cl.: B65G 47/82, B65G 47/84

(54) **VORRICHTUNG UND VERFAHREN ZUM AUSLEITEN VON PRODUKTEN, INSBESONDERE FÜLLGUTBEHÄLTERN WIE FLASCHEN**
APPARATUS AND METHOD FOR DIVERTING ARTICLES, PARTICULARLY CONTAINERS SUCH AS BOTTLES
APPAREIL ET PROCÉDÉ POUR DÉVIER DES ARTICLES, EN PARTICULIER DES RÉCIPIENTS TELS QUE DES BOUTEILLES

(30) Priorität: 25.01.2012 DE 102012201059
(43) Veröffentlichungstag der Anmeldung: 03.12.2014
(73) Patentinhaber: Krones AG, 93073 Neutraubling (DE)
(72) Erfinder: SENN, Konrad, 93073 Neutraubling (DE); JOSEFOWITZ, Mareike, 93073 Neutraubling (DE)
(74) Vertreter: Grünecker Patent- und Rechtsanwälte PartG mbB
(86) Internationale Anmeldenummer: PCT/EP2012/077056
(87) Internationale Veröffentlichungsnummer: WO 2013/110427

(56) Entgegenhaltungen:
- EP-A1- 1 020 380
- EP-B1- 2 057 089
- DE-U1- 20 002 411
- US-A- 4 320 840
- US-A- 6 068 105
- US-B1- 6 575 691

## Beschreibung

Die Erfindung betrifft eine Vorrichtung zur Ausleitung von Produkten, insbesondere Füllgutbehältern wie Flaschen, aus einer Transportstrecke.

### Hintergrund

Im Stand der Technik gibt es verschiedene Ausleitsysteme.

So ist aus dem Patent DE3130308 C2 bereits eine Vorrichtung zum Ausleiten fehlerhafter Produkte aus einem Förderband bekannt. Bei dieser Vorrichtung wird die Ausleitung durch Ausleitelemente, welche durch einen Linearmotor angetrieben sind, bewirkt. Die Ausleitelemente sind auf einer auf das Förderband zulaufenden Führungsbahn angeordnet und können magazinartig gesammelt werden. Zur Ausleitung eines fehlerhaften Produkts wird eines der Ausleitelemente auf der Führungsbahn an das Produkt herangeführt, welches es dann durch physischen Kontakt auf ein parallel zum Förderband laufendes Transportband schiebt. Dabei sind die einzelnen Ausleitelemente starr, das Überschieben auf das Transportband wird lediglich durch die Schrägstellung der Führungsbahn erreicht.

Die Vorrichtung hat den Vorteil, dass die Ausleitsegmente einzeln angesteuert werden und die Ausleitung bewirken können. Jedoch ist es mit dieser Vorrichtung nicht möglich, Ausleitungen auf mehrere Transportbänder zu bewirken. Außerdem ist die Vorrichtung aufgrund der nötigen Schrägstellung zum Transportband auch schwierig in unterschiedliche Prozesse zu integrieren, da die Geschwindigkeit der Produkte und die Länge der Ausleitstrecke die notwendige Ausleitgeschwindigkeit und damit die Schrägstellung der Vorrichtung zur Ausleitung bestimmen.

Ferner ist aus der US 6575691 B1 ein Transferarm für Halbleitersegmente bekannt.

In EP1012087 B1 wird eine Vorrichtung beschrieben, bei der ein oder mehrere senkrecht zur Bewegungsrichtung des Transporteurs bewegliche Ausleitsegmente in einem Schlitten in Transportrichtung geführt sind. Wird der Schlitten in Transportrichtung mit gleicher Geschwindigkeit wie die auszuleitenden Produkte bewegt, so können diese durch die ausfahrbaren Ausleitsegmente auf unterschiedliche Ausleitbänder ausgeleitet werden.

Diese Vorrichtung bietet aufgrund der beweglichen Ausleitsegmente die Möglichkeit, eine Ausleitung auch auf mehrere Ausleitbänder zu verwirklichen. Ferner kann bei dieser Vorrichtung die Ausfahrgeschwindigkeit der Ausleitsegmente und die Geschwindigkeit des Schlittens angepasst werden. Allerdings ergibt sich für die Vorrichtung eine Latenzzeit zwischen verschiedenen Ausleitvorgängen, da der Schlitten erst in die Ausgangsstellung zurückgebracht werden muss. Zur Minimierung dieser Latenzzeit sind gegebenenfalls entsprechend hohe Ausleitgeschwindigkeiten senkrecht zur Bewegungsrichtung der Produkte auf dem Transporteur nötig, was gerade bei leichten oder zerbrechlichen Produkten Probleme hervorruft. Es erweist sich ebenso als Nachteil, dass bei nur einem defekten Ausleitsegment die komplette Vorrichtung einer Stillstandszeit für die nötigen Reparaturen unterliegt.

### Aufgabe

Der Erfindung liegt daher die Aufgabe zugrunde, eine Vorrichtung zum Ausleiten von Produkten, insbesondere Füllgutbehältern wie Flaschen, aus einer Transportstrecke zu entwickeln, welche bei hohen Betriebsgeschwindigkeiten einsetzbar ist und ein flexibles Ausleiten sowie hohe Zuverlässigkeit und gleichzeitig geringe Stillstandszeiten im Reparaturfall ermöglicht.

### Lösung

Diese Aufgabe ist erfindungsgemäß durch die im Anspruch 1 charakterisierte Vorrichtung und das in Anspruch 12 beschriebene Verfahren gelöst.

Die Unteransprüche beinhalten zweckgemäße Ausgestaltungen der Erfindung.

Die vorliegende Erfindung zeichnet sich durch sehr hohe Flexibilität aufgrund des Einsatzes eines oder mehrerer Ausleitsegmente, die einen Ausleiter und zwei Schlitten umfassen, aus. Diese, sich auf einer Führung befindenden, Ausleitsegmente bewirken aktiv, durch Variation der Relativposition der Schlitten zueinander, die Ausleitung der dafür vorgesehenen Produkte aus der Transportstrecke auf eine oder mehrere Ausleitstrecken. Es ist daher weder nötig, die Vorrichtung in einem bestimmten Winkel zur Transportstrecke anzuordnen, noch entstehen unerwünschte Latenzzeiten durch das Zurückfahren der Ausleitsegmente in ihre Ausgangsposition.

Ferner wird der Schlitten mit Hilfe eines Linearmotors angetrieben. Dabei bildet die Führung den Stator und jeder der Schlitten fungiert als Läufer. Dadurch lässt sich eine sehr genaue und flexible Steuerung jedes Schlittens erreichen und so die Relativposition der zwei Schlitten eines Ausleitsegments zueinander effizient einstellen. Ferner ergibt sich durch Verwendung eines Linearmotors und die damit verminderte Berührungsfläche von Schlitten und Führung ein geringerer Verschleiß der Schlitten und der Führung.

In einer weiteren Ausführungsform können sich die Ausleitsegmente beziehungsweise die dazugehörigen Ausleiter unabhängig voneinander mit derselben Geschwindigkeit wie die auszuleitenden Produkte bewegen. Dies verringert mögliche Beschleunigungen der auszuleitenden Produkte in Transportrichtung und ermöglicht so ein engeres Aneinanderreihen von Produkten in der Transportstrecke.

In einer Ausführungsform werden die beiden Schlitten auf unterschiedlichen Führungen bewegt, die beispielsweise im Bereich entlang der Transportstrecke parallel angeordnet sein können. Das verringert den benötigten Platz für ein Ausleitsegment und ermöglicht die Ausleitung zweier Produkte, welche sich direkt nebeneinander auf der Transportstrecke befinden, ohne größere Schwierigkeiten.

In einer Ausführungsform werden die beiden Schlitten eines oder der Ausleitsegmente auf einund derselben Führung bewegt. Das verringert den Steueraufwand für die Schlitten gegenüber der Verwendung von jeweils einer Führung für jeden der beiden Schlitten.

In weiteren Ausführungsformen kann die mechanische Verbindung zwischen dem Ausleiter und den Schlitten durch starre Verbindungen mit Gelenken oder einen Scherenhebel oder durch nicht starre Verbindungen gewährleistet werden, womit eine Anpassung der Vorrichtung an unterschiedliche auszuleitende Produkte oder verschiedene räumliche Gegebenheiten möglich wird.

In einer weiteren Ausführungsform ist die mechanische Verbindung zwischen dem Ausleiter und den Schlitten derart, dass bei Änderung der Relativposition der Schlitten zueinander eine Bewegung des Ausleiters senkrecht zur Bewegungsrichtung der Produkte in der Transportstrecke entweder nur in Bezug auf einen der beiden Schlitten oder in Bezug auf die Mitte der Verbindungsstrecke der zwei Schlitten stattfindet. Dies gestattet eine genaue Steuerung der Ausleitung.

In einer Ausführungsform bildet die Führung eine geschlossene Kurve, welche in eine Ausleitstrecke, eine Rückholstrecke und eine Ruheposition, sowie gegebenenfalls auch weitere Strecken oder Positionen wie zum Beispiel eine Beschleunigungsstrecke, unterteilt werden kann. Dies erlaubt die unabhängige Ausleitung mehrerer Produkte bei der Verwendung von mehreren Ausleitsegmenten und verringert oder vermeidet gleichzeitig die Latenzzeit zwischen einem Ausleitvorgang und dem nächsten.

In einer Ausführungsform steuern ein Näherungsschalter und eine Steuereinrichtung den Einsatz eines oder mehrerer Ausleitsegmente. Dies erlaubt den effizienten, automatisierten Einsatz von nur so vielen Ausleitsegmenten wie für die Ausleitung der entsprechenden Anzahl von Produkten nötig sind und verringert dadurch die Betriebskosten und den Verschleiß.

Unter beispielsweise der Verwendung der Vorrichtung lässt sich ein Verfahren verwirklichen zum Ausleiten von Produkten, insbesondere Füllgutbehältern wie Flaschen, aus einer Transportstrecke mit Hilfe von einem oder mehreren Ausleitsegmenten, wobei das oder jedes Ausleitsegment einen Schlitten und einen Ausleiter umfasst und der Ausleiter durch eine Auslenkung die Ausleitung des Produktes bewirken kann. Das Verfahren zeichnet sich dadurch aus, dass die Auslenkung des Ausleiters mittels einer mechanischen Verbindung durch Änderung der Relativposition des zweiten Schlittens zum ersten Schlitten bewirkt werden kann. Dies erlaubt eine sehr genaue, für jedes Produkt individuelle Ausleitung aus der Transportstrecke auf eine Ausleitstrecke.

In einer Ausführungsform ist das Verfahren dadurch gekennzeichnet, dass es wahlweise mit einem oder mehreren der folgenden Merkmale realisiert werden kann: die Ausleitsegmente sind unabhängig voneinander; die Ausleitsegmente werden durch einen, zwei, aber in jedem Fall gemeinsame, Linearmotoren angetrieben; die Ausleitung eines Produktes aus der Transportstrecke erfolgt durch den Einsatz nur eines Ausleitsegments; die Ausleitung der Produkte aus der Transportstrecke kann auf unterschiedliche Ausleitstrecken erfolgen; die Bereitstellung eines Ausleitsegments für die Ausleitung eines Produkts aus der Transportstrecke wird durch einen Näherungsschalter bewirkt; die Steuerung des oder der Ausleitsegmente wird durch eine Steuereinrichtung bewirkt. Diese Merkmale ermöglichen durch geeignete Kombination eine große Flexibilität des Verfahrens in Bezug auf die Anpassung an die auszuleitenden Produkte und in Bezug auf den industriellen Prozess in den das Verfahren integriert werden soll. So lässt sich beispielsweise eine Anpassung des Verfahrens an unterschiedliche Produktabstände oder Geschwindigkeiten der Produkte auf der Transportstrecke ohne große Schwierigkeiten realisieren. Ferner verringern diese Merkmale die Störanfälligkeiten des Verfahrens.

In einer weiteren Ausführungsform ist es bei geeigneter Wahl des Geschwindigkeitsprofils der Schlitten möglich, die Produkte aus der Transportstrecke mit sehr geringem Impulsübertrag auf eine der Ausleitstrecken auszuleiten, oder mit sehr hohem Impulsübertrag aus der Transportstrecke in dafür vorgesehene Behälter auszusortieren. Dazu wird die Relativgeschwindigkeit der Schlitten zueinander im ersten Fall im Vergleich zum zweiten Fall langsam, im zweiten sehr schnell verändert. Die erste der beiden Möglichkeiten ermöglicht eine Ausleitung der auszuleitenden Produkte mit permanentem physischen Kontakt von Ausleiter und auszuleitendem Produkt während des Ausleitvorgangs, wobei ein Umkippen verhindert werden kann. Die zweite Variante ermöglicht ein schnelles Ausleiten von Produkten, bei denen eine hohe Wahrscheinlichkeit des Umkippens aufgrund von bestimmten, die Stabilität der Produkte beeinflussenden, Eigenschaften des auszuleitenden Produktes besteht, mit nicht permanentem und daher kürzerem physischen Kontakt von Ausleiter und auszuleitendem Produkt, in dafür vorgesehene Behälter. Diese Behälter können beispielsweise Behälter für Grün- oder Weißglas sein, oder, in Zusammenhang mit Stofferkennungssystemen, Behälter für das Trennen oder Entsorgen von unterschiedlichen Geschmacks- oder Geruchsstoffen.

In einer weiteren Ausführungsform gibt es einen zusätzlichen Streckenabschnitt, auf welchem zusätzliche Schlitten gelagert sind, welche im Bedarfsfall bei der Ausleitung eines Produktes zusätzlich zu den zwei Schlitten eines Ausleitsegments eingesetzt werden können. Dabei können die zusätzlichen Schlitten mit den Schlitten des Ausleitsegments in Kontakt treten und diese entweder weiter beschleunigen oder abbremsen. Damit kann die Kraft, welche bei der Ausleitung des auszuleitenden Produkts durch die Veränderung der Relativposition der mehr als 2 Schlitten zueinander bewirkt wird, erhöht werden und auch Produkte mit einer höheren Masse als andere Produkte in der Transportstrecke, für die daher eine Ausleitung mit Hilfe von 2 Schlitten nicht ausreichend ist, ausgeleitet werden.

### Kurzbeschreibung der Abbildungen

- Abbildung 1:: Schematische Darstellung eines Ausleitsegments auf einer Führung
- Abbildung 2:: Schematische Ansicht der Vorrichtung mit Transportbändern von oben
- Abbildung 3:: Detaillierte schematische Seitenansicht eines Ausleitsegments mit Führung und Transportstrecke
- Abbildung 4:: Schematische dreidimensionale Ansicht der Vorrichtung
- Abbildung 5a-5d:: Schematische Darstellung des Ausleitvorgangs
- Abbildung 6:: Verschiedene Ausführungsformen der Verbindung von Schlitten und Ausleiter
- Abbildung 7:: Qualitative Darstellung der Geschwindigkeitsprofile der zwei Schlitten eines Ausleitsegments.

### Detaillierte Beschreibung

Das Ausleiten von Produkten, insbesondere Füllgutbehältern wie Flaschen, wird mittels einer Vorrichtung zum Ausleiten mit einem oder mehreren Ausleitsegmenten erreicht.

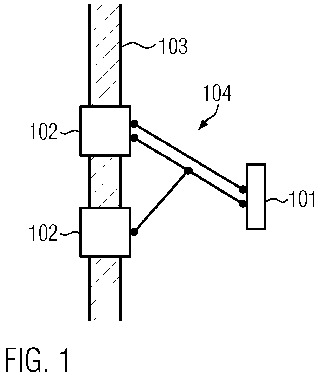

In Abbildung 1 ist schematisch ein Ausleitsegment 104 auf der entsprechenden Führung 103 dargestellt. Die Verbindung von Ausleitsegment 104 und Führung 103 geschieht mittels zweier Schlitten 102, welche eine Verbindung mit der Führung 103 aufweisen. Neben diesen Schlitten 102 weist das Ausleitsegment 104 noch einen Ausleiter 101 auf, welcher durch physischen Kontakt die Ausleitung eines Produkts bewirken kann. Durch eine Änderung des Relativabstands der Schlitten 102 zueinander kann die Ausleitung des auszuleitenden Produktes durch die Änderung der Auslenkung des Ausleiters 101 bewirkt werden. Die Änderung der Relativposition der Schlitten 102 auf der Führung 103 kann durch Veränderung der jeweiligen Schlittengeschwindigkeiten bewirkt werden. Dabei wird für begrenzte Zeit die Geschwindigkeit von einem der oder beider Schlitten 102 verändert, sodass die resultierende Geschwindigkeitsdifferenz der beiden Schlitten über einen gewissen Zeitraum zu einer Verringerung oder Vergrößerung des Relativabstands der Schlitten in Richtung der Führung führt.

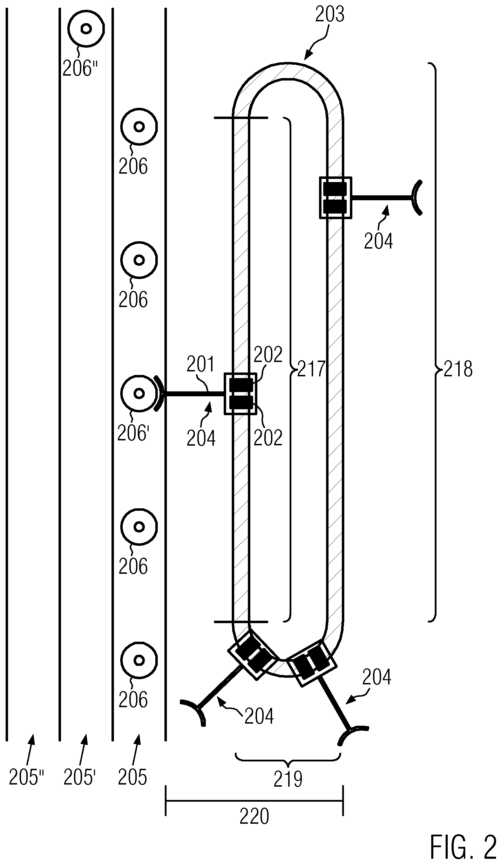

Abbildung 2 zeigt eine mögliche Ausführungsform der Vorrichtung zum Ausleiten 220. Wie dargestellt, wird sie neben der betreffenden Transportstrecke 205 und den angrenzenden Ausleitstrecken 205' und 205" angebracht. Die Vorrichtung zum Ausleiten 220 umfasst eine Führung 203. Diese lässt sich in die Bereiche "Ausleitungsstrecke" 217, "Rückholstrecke" 218 und "Ruheposition" 219 unterteilen. Eine mögliche Einbindung zusätzlicher Streckenabschnitte, wie zum Beispiel eines Reparaturbahnhofs für defekte Ausleitsegmente oder einer weiteren Warteposition, auf der sich Ausleitsegmente für spezielle Einsätze befinden, wie zum Beispiel, aber nicht beschränkt darauf, das Ausleiten von Produkten aus der Transportstrecke mit besonderen Eigenschaften, oder Segmente, die speziell für die Reinigung der Transportstrecke 205 oder der Ausleitstrecken 205' und 205" konzipiert werden oder zusätzliche Schlitten 202, ist denkbar.

Auf der gesamten Führung 203 kann ein Antrieb der Ausleitsegmente 204 erfolgen. Die erfinderische Ausführungsform ist dabei die Verwendung eines Linearmotors, welcher von einer entsprechenden Führung 203 als Stator, in dieser Ausführungsform bestehend aus Magneten, und den Schlitten 202, welche dann als Läufer dienen, gebildet wird. Auf der Ausleitstrecke 217 wird durch Änderung des Abstandes der Schlitten 202 im Ausleitsegment 204 die Auslenkung des Ausleiters 201 eingestellt. Gibt es unter der Menge der Produkte 206 ein Element 206' welches ausgeleitet werden muss, so wird durch die Auslenkung ein physischer Kontakt zwischen auszuleitendem Produkt 206' und dem Ausleiter 201 hergestellt. Entlang der Ausleitstrecke 217 wird dann durch Regelung des Abstands der Schlitten 202 zueinander die Amplitude der Auslenkung verändert. Dadurch wird das auszuleitende Produkt 206' von der Transportstrecke 205 auf eine der Ausleitstrecken 205' oder 205" geleitet. Das dann ausgeleitete Produkt 206" wird in Abbildung 2 auf der Ausleitstrecke 205' weiterbefördert und der physische Kontakt zwischen Ausleiter 201 und ausgeleitetem Produkt 206" wird beendet, indem der Relativabstand der Schlitten 202 zueinander auf beispielsweise den Anfangswert eingestellt wird. Anschließend wird das Ausleitsegment 204 auf der Rückholstrecke 218, entgegen der Bewegungsrichtung der Produkte 206 auf der Transportstrecke 205, in die Ruheposition 219 geführt. In dieser Ruheposition 219 kann das oder mehrere Ausleitsegmente 204 dann gelagert werden, bis die nächste Ausleitung nötig wird.

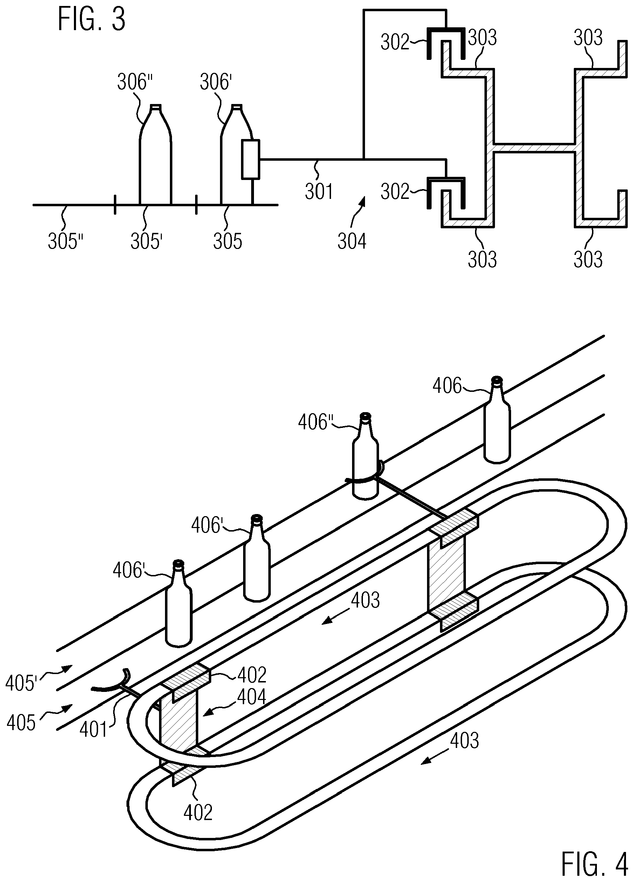

Abbildung 3 zeigt mit einer möglichen Anordnung von zwei Führungen 303, wie eine Montage der zwei Schlitten 302 eines Ausleitsegments 304 erfolgen kann. In dieser Ausführungsform sind die beiden Führungen so angeordnet, dass die von den Führungen jeweils umschlossenen Flächen parallel zueinander sind. Stellen diese Flächen Ebenen dar, so sind diese planparallel. Einer der Schlitten 302 befindet sich auf der oberen Führung 303, der andere Schlitten 302 auf der unteren Führung 303. Über geeignete Verbindungen sind die Schlitten mit dem Ausleiter 301 verbunden, welcher die Ausleitung auszuleitender Produkte 306' von der Transportstrecke 305 auf eine Ausleitstrecke 305' durchführt. Die Änderung der Relativposition der Schlitten 302 zueinander wird in dieser Ausführungsform nicht durch eine unterschiedliche Form der zwei Führungen 303 bewirkt, sondern durch eine Änderung des Geschwindigkeitsprofils der Schlitten entlang der Führungen.

Abbildung 4 zeigt eine schematische dreidimensionale Ansicht der Vorrichtung und einer Transportstrecke 405 und einer Ausleitstrecke 405'. Bei dieser Ausführungsform können sich die Schlitten 402 innerhalb des Ausleitsegments 404 befinden. Durch Variation ihrer relativen Position zueinander kann dann die Auslenkung des Ausleiters 401 verändert und so die Ausleitung eines auszuleitenden Produkts 406' bewirkt werden. Eine mögliche Ausführungsform des Antriebs der Ausleitsegmente 404 kann über den Einsatz von Linearmotoren, gebildet aus den Schlitten 402 und den parallel verlaufenden Führungen 403, erfolgen.

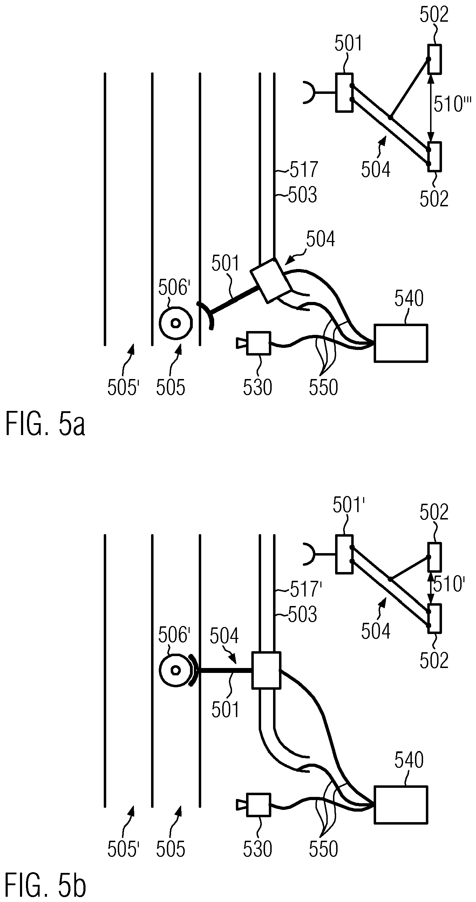

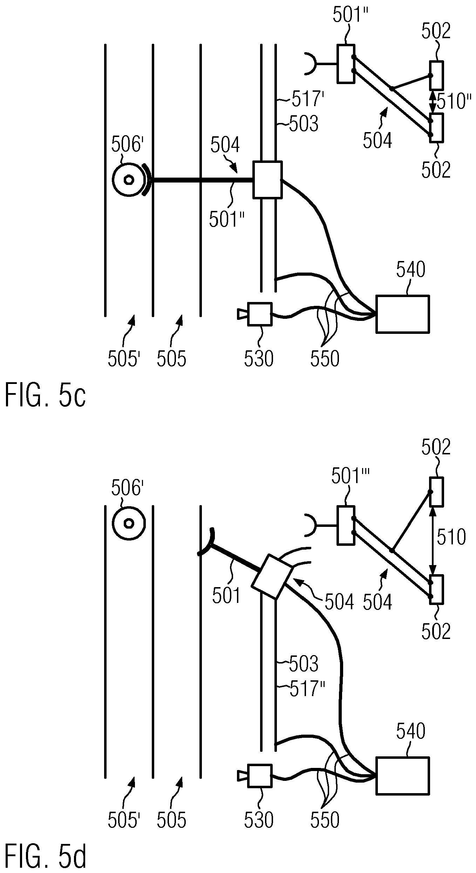

Die Veränderung der Relativposition der Schlitten ist in Abbildung 5a bis 5d dargestellt. In dieser Ausführungsform bewegen sich beide Schlitten 502 auf derselben Führung 503. Dies stellt lediglich eine mögliche Ausführungsform dar und dient nur der besseren Illustration. Der im Folgenden beschriebene Vorgang lässt sich auch unter Verwendung von 2 Führungen realisieren. Am Anfang der Ausleitstrecke 517 (Abbildung 5a) auf der Führung 503 haben die beiden Schlitten einen Abstand 510. Soll ein Produkt 506' von der Transportstrecke 505 auf eine Ausleitstrecke 505' ausgeleitet werden, so wird ein Ausleitsegment 504, beispielsweise durch den Näherungsschalter 530 über eine Steuereinrichtung 540, aktiviert und seine im Folgenden beschriebene Bewegung auf der Führung 503 durch die Steuereinrichtung 540 gesteuert. Dabei kann die Verbindung zwischen Näherungsschalter 530, Steuereinrichtung 540 und Führung 503 sowie den Schlitten 502 in dem Ausleitsegment 504 über drahtlose Verbindungen oder Kabel realisiert werden. Auf der Ausleitstrecke 517' (Abbildung 5b) wird der Abstand 510 der Schlitten 502 auf den Abstand 510' geändert, indem die Geschwindigkeit der Schlitten 502 durch die Steuereinrichtung 540 eingestellt wird. Bei dem entsprechenden Wert der Ausleitung tritt der Ausleiter 501' in physischen Kontakt mit dem auszuleitenden Produkt 506'. Das gesamte Ausleitsegment 504 und das auszuleitende Produkt 506' bewegen sich nun mit derselben Geschwindigkeitskomponente in Transportrichtung. Wird der Abstand der Schlitten 502 von 510' auf 510" weiter verändert (Abbildung 5c), erfolgt eine Ausleitung des auszuleitenden Produkts 506' auf eine Ausleitstrecke 505'. Dabei kann die Ausleitung des auszuleitenden Produktes 506', gesteuert durch die Steuereinrichtung 540, so erfolgen, dass, abhängig vom Behälterdurchmesser des auszuleitenden Produktes 506', die Ausleitung immer zentrisch auf eine Ausleitstrecke 505' mit der, von der Masse des auszuleitenden Produktes 506' abhängigen, nötigen Kraft durchgeführt wird. Für die Änderung des Abstandes der Schlitten 502 zueinander wird die Geschwindigkeit der Schlitten 502 in Richtung der Bewegung der Produkte der Transportstrecke variiert. Die Geschwindigkeit des Ausleitsegments 504, beziehungsweise des Ausleiters 501, in Richtung der Bewegung der Produkte auf der Transportstrecke 505 bleibt jedoch gleich der Geschwindigkeit des auszuleitenden Produkts in der Transportstrecke. Ist die Ausleitung am Ende der Ausleitstrecke 517" abgeschlossen, wird der Abstand der Schlitten von 510" wieder auf den Anfangswert 510 gebracht (Abbildung 5d). Dadurch wird auch die Auslenkung des Ausleiter 501'" auf den Anfangswert gebracht. Das Ausleitsegment 504 kann dann, wie in Abbildung 2 dargestellt, über die Rückholstrecke 218 in die Ruheposition 219 zurückkehren und steht für die nächste Ausleitung zur Verfügung.

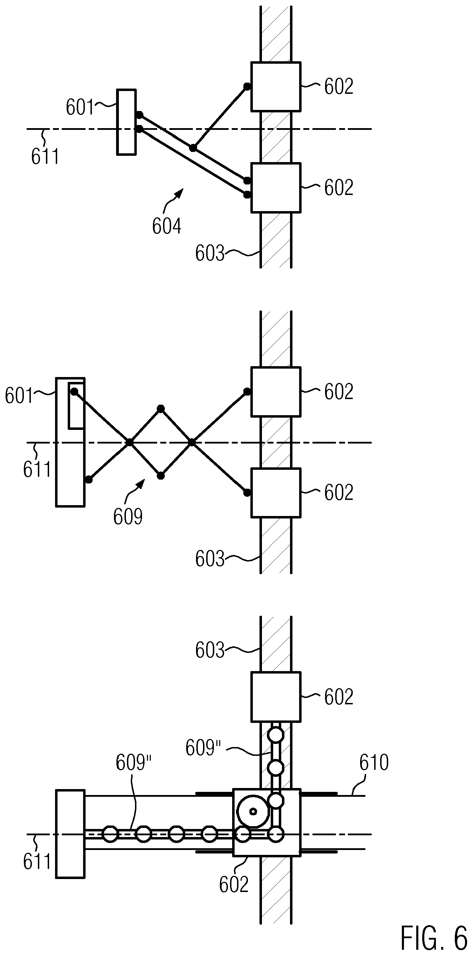

Abbildung 6 zeigt einige mögliche Ausführungsformen für die mechanische Verbindung der Schlitten 602 mit dem Ausleiter 601. So kann der Ausleiter 601 mit den zwei Schlitten 602 über starre Verbindungsstäbe mit Gelenken 609 verbunden sein. Dabei wird über die Verbindung des Ausleiters 601 mit einem der Schlitten 602 über zwei Verbindungsstäbe mit Gelenken verhindert, dass eine unkontrollierte Bewegung des Ausleiters 601 erfolgen kann. Die Verbindung einer der Verbindungsstäbe über einen weiteren mit Gelenken versehenen Verbindungsstab zu dem zweiten Schlitten 602 realisiert die Änderung der Auslenkung bei sicher änderndem Abstand der Schlitten 602 zueinander. In einer speziellen Realisierungsform, bei der alle Verbindungsstäbe gleich lang sind und je ein Verbindungsstab von jedem Schlitten 602 an der Mitte des Ausleiters und an der Mitte des jeweiligen Schlittens über ein Gelenk befestigt ist, bleibt die Position des Ausleiters gegenüber der Mitte 611 der Verbindungslinie der beiden Schlitten 602 stets gleich.

Eine weitere mögliche Realisierung der mechanischen Verbindung der Schlitten 602 mit dem Ausleiter 601 kann mittels eines Scherenhebels 609' erreicht werden. Dieser wird über Gelenke an den Schlitten 602 befestigt. Am Ausleiter 601 wird der Scherenhebel an einer Stelle mit einem Gelenk und an der anderen Stelle beweglich, wie beispielsweise in einer Ausnehmung, einer Hebelendenführung oder einer Schiene, angebracht, sodass sich der Scherenhebel 609' als solches in seiner Länge flexibel ändern kann, abhängig von der relativen Position der Schlitten 602 zueinander. Auch hier bleibt die Position des Ausleiters in Bezug auf die Mitte 611 der Schlitten konstant.

Eine weitere mögliche Realisierungsform der mechanischen Verbindung der Schlitten 602 mit dem Ausleiter 601 kann mittels nicht starrer Verbindungselemente erreicht werden. Eine mögliche Ausführungsform ist eine flexible Kette 609", zum Beispiel eine Schubkette in einer Kettenführung, sodass die Übertragung von Zug- und Schubkräften möglich ist. Diese Kette 609" wird von einem der Schlitten 602 über ein Umlenkrad in dem anderen Schlitten 602 am Ausleiter 601 befestigt. Wird der Ausleiter über eine, senkrecht zur Bewegungsrichtung der auszuleitenden Produkte 506' auf der Transportstrecke 505 bewegliche, Schiene 610 am zuletzt genannten Schlitten 602 befestigt, so kann die Änderung des Abstandes der Schlitten 602 zueinander über die Kette 609" direkt in eine Änderung der Auslenkung des Ausleiters 601 umgesetzt werden. Hierbei bleibt die Position des Ausleiters gegenüber einer beliebig ausgezeichneten, mit der Schiene 610 mitbewegten, Achse 611 konstant.

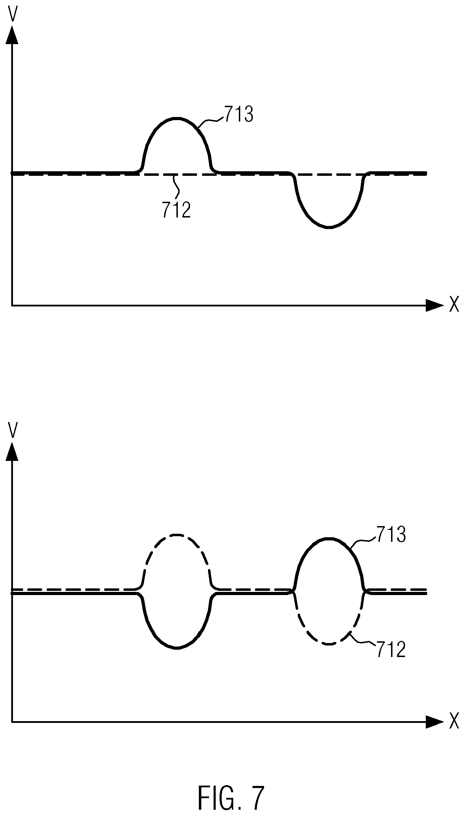

Abbildung 7 zeigt zwei mögliche Ausführungsformen eines Geschwindigkeitsprofils der Schlitten 602. Dargestellt ist nur das Geschwindigkeitsprofil abhängig vom Ort x der Schlitten 502 auf der Ausleitstrecke, wie sie beispielsweise in Abbildung 2 dargestellt ist. In der ersten Ausführungsform, die beispielsweise bei einer Ausführungsform der mechanischen Verbindung durch nicht starre Verbindungselemente realisiert sein kann, bewegt sich einer der Schlitten mit der konstanten Geschwindigkeit 712. Die Position des Ausleiters bleibt in Bezug auf diesen Schlitten, oder einen ausgezeichneten, mit diesem Schlitten mitbewegten Punkt, in Richtung der Bewegung der Produkte in der Transportstrecke konstant. Der zweite Schlitten erfährt an einem bestimmten Ort x' eine Beschleunigung, sodass dessen Geschwindigkeit 713 erhöht wird. Damit ändert sich der Abstand 510 der Schlitten 502 zueinander zunächst auf den Abstand 510' und der Ausleiter 501 kann die Ausleitung des auszuleitenden Produkts 506' durchführen. Mit Erreichen der gewünschten Auslenkung des Ausleiters 501 wird auch die Geschwindigkeit 713 auf die Geschwindigkeit 712 reduziert um den Abstand 510" und damit die eingestellte Auslenkung beizubehalten. Ist der Ausleitvorgang beendet, wird die Veränderung des Abstands 510" der Schlitten 502 rückgängig gemacht, indem die Geschwindigkeit 713 reduziert wird. Ist der ursprüngliche Abstand 510 erreicht, sind auch die Geschwindigkeiten 712 und 713 identisch, sodass sich der Abstand der Schlitten 602 zueinander nicht mehr ändert.

In einer weiteren Ausführungsform erfahren beide Schlitten 502 an einem bestimmten Ort eine Geschwindigkeitsänderung dergestalt, dass einer der Schlitten mit der Geschwindigkeit 713' eine Verzögerung erfährt und der andere, mit der Geschwindigkeit 712' eine Beschleunigung. Dieses Geschwindigkeitsprofil könnte bei der Verwendung starrer Verbindungselemente realisiert sein, wobei sich die Position des Ausleiters 501 in Bezug auf die Mitte der Verbindungsstrecke der beiden Schlitten 502 in Richtung der Bewegung der Produkte in der Transportstrecke nicht ändert. Ist die nötige Auslenkung für die Ausleitung eines Produkts 506' aus einer Transportstrecke 505 auf eine Ausleitstrecke 505' erreicht, sind auch die Geschwindigkeiten 712' und 713' der beiden Schlitten 502 wieder gleich. Ist die Ausleitung abgeschlossen, wird der Abstand der Schlitten zueinander durch Beschleunigung des Schlittens 502 mit der Geschwindigkeit 713' und durch Verzögerung des Schlittens 502 mit der Geschwindigkeit 712' wieder auf den Ausgangswert gebracht. Damit ist der Ausleitvorgang abgeschlossen und das Ausleitsegment 504 kann über die Rückholstrecke in die Ruheposition zurückkehren.

Die Darstellung der Geschwindigkeitsprofile in Abbildung 7 zeigt nur die prinzipiellen Veränderungen der Geschwindigkeitskomponenten der Schlitten 502 in Transportrichtung und dient in dieser Form keinesfalls als Beschränkung. So kann die Ausleitung eines Produktes 406' an jeder beliebigen anderen Position der Ausleitungsstrecke 217, als der Position x, welche in Abbildung 7 benutzt wurde, und mit beliebiger Dauer des Ausleitvorgangs erfolgen.

## Patentansprüche

1. Vorrichtung zum Ausleiten von Produkten, insbesondere Füllgutbehältern wie Flaschen, aus einer Transportstrecke mit Hilfe von einem oder mehreren Ausleitsegmenten (104), wobei das oder jedes Ausleitsegment (104) einen Schlitten (102) und einen Ausleiter (101) umfasst und der Ausleiter durch eine Auslenkung die Ausleitung des Produkts bewirken kann, wobei das oder jedes Ausleitsegment einen zweiten Schlitten (102) umfasst wobei jeder der zwei Schlitten an einer Führung (103) bewegbar gelagert montiert ist und der Ausleiter (101) und die Schlitten mechanisch miteinander verbunden sind, sodass der relative Abstand der Schlitten zueinander die Auslenkung des Ausleiters bestimmt, **dadurch gekennzeichnet, dass** die Schlitten (102, 202, 402) und die Führung (103, 203, 403) einen Linearmotor ergeben.

2. Vorrichtung aus Anspruch 1, **dadurch gekennzeichnet, dass** mehrere Ausleitsegmente vorgesehen sind, die eine voneinander unabhängige Bewegbarkeit aufweisen.

3. Vorrichtung aus den Ansprüchen 1 oder 2, **dadurch gekennzeichnet, dass** die beiden Schlitten eines Ausleitsegments eine Montierung auf ein und derselben Führung (103) oder unterschiedlichen Führungen (403) aufweisen.

4. Vorrichtung aus den Ansprüchen 1 bis 3, **dadurch gekennzeichnet, dass** das oder jedes Ausleitsegment (104) eine mechanische Verbindung des Ausleiters und der zwei Schlitten (102) aufweist, derart, dass jeweils mindestens ein starrer Verbindungsstab über Gelenke sowohl mit dem Ausleiter als auch mit jeweils einem der zwei Schlitten verbunden ist.

5. Vorrichtung aus den Ansprüchen 1 bis 4, **dadurch gekennzeichnet, dass** das oder jedes Ausleitsegment eine mechanische Verbindung des Ausleiters (601) und der Schlitten (602) über einen Scherenarm (609') aufweist.

6. Vorrichtung aus den Ansprüchen 1 bis 5, **dadurch gekennzeichnet, dass** das oder jedes Ausleitsegment eine mechanische Verbindung des Ausleiters und der zwei Schlitten aufweist, derart, dass der Ausleiter und die zwei Schlitten durch nicht starre Verbindungselemente(609"), beispielsweise durch eine Kette, verbunden sind, welche die Veränderungen der relativen Position der zwei Schlitten zueinander in eine Veränderung der Auslenkung des Ausleiters umsetzen.

7. Vorrichtung aus den Ansprüchen 1 bis 6, **dadurch gekennzeichnet, dass** das oder jedes Ausleitsegment eine mechanische Verbindung des Ausleiters und der zwei Schlitten aufweist, derart, dass:
eine Bewegung des Ausleiters in Bezug auf einen der zwei Schlitten nur senkrecht zur Bewegungsrichtung der Produkte der Transportstrecke stattfindet,
oder eine Bewegung des Ausleiters in Bezug auf die Mitte der beiden Schlitten nur senkrecht zur Bewegungsrichtung der Produkte der Transportstrecke stattfindet.

8. Vorrichtung aus den Ansprüchen 1 bis 7, **dadurch gekennzeichnet, dass** die Führung (203) eine in sich geschlossene Geometrie aufweist.

9. Die Vorrichtung aus den Ansprüchen 1 bis 8, **dadurch gekennzeichnet, dass** die Führung (203) aufweist:
eine Ausleitstrecke(217) , die entlang, vorzugsweise parallel, zur Bewegungsrichtung der Produkte in der Transportstrecke angebracht ist und auf der an beliebiger Stelle die Ausleitung des auszuleitenden Produktes durch das Ausleitsegment (204) durchgeführt werden kann;
eine Rückholstrecke (218), auf der die Schlitten abgebremst werden und auf der die Bewegung der Schlitten entgegen der Bewegungsrichtung der Produkte in der Transportstrecke verlaufen kann;
eine Ruheposition (219), auf der Ausleitsegmente nacheinander angeordnet werden können.

10. Vorrichtung aus den Ansprüchen 1 bis 9, **dadurch gekennzeichnet, dass:**
ein Näherungsschalter (530) den Befehl zur Bereitstellung eines Ausleitsegments erteilt;
eine Steuereinrichtung (540) aus der Geschwindigkeit des auszuleitenden Produktes in der Transportstrecke die Beschleunigung und Geschwindigkeit der Schlitten auf der Ausleitstrecke bestimmt.

11. Vorrichtung aus den Ansprüchen 1 bis 10, **dadurch gekennzeichnet dass** eines oder mehrere Ausleitsegmente aufweisen:
die Möglichkeit auf der Ausleitstrecke (217) mit derselben Geschwindigkeit wie die Produkte in der Transportstrecke bewegt zu werden.

12. Verfahren zum Ausleiten von Produkten, insbesondere Füllgutbehältern wie Flaschen, aus einer Transportstrecke mit Hilfe von einem oder mehreren Ausleitsegmenten (104), wobei das oder jedes Ausleitsegment einen Schlitten (102) und einen Ausleiter (101) umfasst und der Ausleiter durch eine Auslenkung die Ausleitung des Produkts bewirken kann, wobei die Auslenkung des Ausleiters mittels einer mechanische Verbindung durch Änderung der Relativposition eines zweiten Schlittens (102) zu dem ersten Schlitten bewirkt wird, wobei die Ausleitsegmente (104) durch Linearmotoren angetrieben werden.

13. Verfahren nach Anspruch 12, **dadurch gekennzeichnet, dass** eines oder mehrere der folgenden Merkmale gegeben sind:
die Ausleitung wird durch unabhängig von einander bewegliche Ausleitsegmente (104) bewirkt;
die Ausleitung jeweils eines Produktes wird durch genau ein Ausleitsegment (104) bewirkt; die Ausleitung erfolgt aus der Transportstrecke auf eine oder mehrere Ausleitstrecken;
die Bereitstellung eines oder mehrerer Ausleitsegmente wird durch einen Näherungsschalter (530) bewirkt;
die Steuerung des oder der Ausleitsegmente (104) wird durch eine Steuereinrichtung (540) bewirkt.

## Claims

1. Device for discharging products, particularly product containers such as bottles, from a transport path by means of one or more discharge segments (104), wherein the or each discharge segment (104) comprises a carriage (102) and a discharger (101), and said discharger can effect a discharge of the product by way of a deflection,
wherein the or each discharge segment comprises a second carriage (102), wherein each of the two carriages is mounted on a guide (103) to be movably supported and the discharger (101) and the carriages are mechanically connected to one another such that the relative distance of the carriages from one another determines the deflection of the discharger, **characterized in that** the carriages (102, 202, 402) and the guide (103, 203, 403) form a linear motor.

2. Device according to claim 1, **characterized in that** a plurality of discharge segments are provided that are movable independently of one another.

3. Device according to claims 1 or 2, **characterized in that** the two carriages of a discharge segment are mounted on one and the same guide (103) or on different guides (403).

4. Device according to claims 1 to 3, **characterized in that** the or each discharge segment (104) has a mechanical connection of the discharger and of the two carriages (102) such that at least one rigid connection rod is respectively connected via hinges to both the discharger and a respective one of the two carriages.

5. Device according to claims 1 to 4, **characterized in that** the or each discharge segment has a mechanical connection of the discharger (601) and of the carriages (602) via a scissor arm (609').

6. Device according to claims 1 to 5, **characterized in that** the or each discharge segment has a mechanical connection of the discharger and of the two carriages such that the discharger and the two carriages are connected by non-rigid connection elements (609"), for instance by a chain, which translate the changes in the relative position of the two carriages relative to one another into a change in the deflection of the discharger.

7. Device according to claims 1 to 6, **characterized in that** the or each discharge segment has a mechanical connection of the discharger and of the two carriages such that:
a movement of the discharger relative to one of the two carriages takes place only in a direction perpendicular to the movement direction of the products of the transport path,
or a movement of the discharger relative to the center of the two carriages takes place only in a direction perpendicular to the movement direction of the products of the transport path.

8. Device according to claims 1 to 7, **characterized in that** the guide (203) has a closed geometry.

9. Device according to claims 1 to 8, **characterized in that** the guide (203) comprises:
a discharge path (217) which is arranged along, preferably in parallel with, the movement direction of the products in the transport path and on which at any place the product to be discharged can be discharged by the discharge segment (204);
a return path (218) on which the carriages are decelerated and on which the movement of the carriages can be opposite to the movement direction of the products in the transport path;
a rest position (219) at which discharge segments can be arranged one after the other.

10. Device according to claims 1 to 9, **characterized in that**:
a proximity switch (530) gives the command to provide a discharge segment;
a control device (540) determines the acceleration and speed of the carriages on the discharge path from the speed of the product to be discharged in the transport path.

11. Device according to claims 1 to 10, **characterized in that** one or plural discharge segments are:
able to move on the discharge path (217) at the same speed as the products in the transport path.

12. Method for discharging products, particularly product containers such as bottles, from a transport path by means of one or plural discharge segments (104), wherein the or each discharge segment comprises a carriage (102) and a discharger (101), and the discharger can effect the discharge of the product by a deflection, wherein the deflection of the discharger is effected by way of a mechanical connection by changing the relative position of a second carriage (102) with respect to the first carriage, wherein the discharge segments (104) are driven by linear motors.

13. Method according to claim 12, **characterized in that** one or more of the following features are given:
the discharge is effected by discharge segments (104) which are movable independently of one another;
the discharge of a respective product is effected by exactly one discharge segment (104);
the discharge is carried out from the transport path onto one or plural discharge paths;
the provision of one or plural discharge segments is effected by a proximity switch (530);
the control of the discharge segment(s) (104) is effected by a control device (540).

## Revendications

1. Dispositif destiné à extraire d'un parcours de transport, des produits, notamment des contenants pour substances de remplissage, comme des bouteilles, à l'aide d'un ou de plusieurs segments d'extraction (104), dispositif
dans lequel le ou chaque segment d'extraction (104) comprend un chariot (102) et un extracteur (101), et l'extracteur peut produire, par un débattement, l'extraction du produit,
dans lequel le ou chaque segment d'extraction comprend un deuxième chariot (102),
dans lequel chacun des deux chariots est monté de manière mobile sur une glissière de guidage (103), et l'extracteur (101) et les chariots sont reliés mécaniquement les uns aux autres, de sorte que la distance relative entre les chariots détermine le débattement de l'extracteur,
**caractérisé en ce que** les chariots (102, 202, 402) et la glissière de guidage (103, 203, 403) réalisent un moteur linéaire.

2. Dispositif selon la revendication 1,
**caractérisé en ce que** sont prévus plusieurs segments d'extraction, qui présentent une mobilité de manière indépendante les uns des autres.

3. Dispositif selon les revendications 1 ou 2,
**caractérisé en ce que** les deux chariots d'un segment d'extraction présentent un montage sur une seule et même glissière de guidage (103) ou sur des glissières de guidage (403) différentes.

4. Dispositif selon les revendications 1 à 3,
**caractérisé en ce que** le ou chaque segment d'extraction (104) comprend une liaison mécanique de l'extracteur et des deux chariots (102), de façon telle que respectivement au moins une tige de liaison rigide soit reliée par l'intermédiaire d'articulations, aussi bien avec l'extracteur qu'avec respectivement l'un des deux chariots.

5. Dispositif selon les revendications 1 à 4,
**caractérisé en ce que** le ou chaque segment d'extraction présente une liaison mécanique de l'extracteur (601) et des chariots (602) par l'intermédiaire d'un système de bras extensible à articulations en ciseaux (609').

6. Dispositif selon les revendications 1 à 5,
**caractérisé en ce que** le ou chaque segment d'extraction présente une liaison mécanique de l'extracteur et des deux chariots de façon telle que l'extracteur et les deux chariots soient reliés par des éléments de liaison (609") non rigides, par exemple par une chaine, qui convertissent les variations de la position relative des deux chariots l'un par rapport à l'autre en une variation du débattement de l'extracteur.

7. Dispositif selon les revendications 1 à 6,
**caractérisé en ce que** le ou chaque segment d'extraction présente une liaison mécanique de l'extracteur et des deux chariots, de manière telle que :
un mouvement de l'extracteur par rapport à l'un des deux chariots n'ait lieu que perpendiculairement à la direction de mouvement de déplacement des produits du parcours de transport,
ou un mouvement de l'extracteur par rapport au milieu entre les deux chariots n'ait lieu que perpendiculairement à la direction de mouvement de déplacement des produits du parcours de transport.

8. Dispositif selon les revendications 1 à 7,
**caractérisé en ce que** la glissière de guidage (203) présente une géométrie fermée en soi.

9. Le dispositif selon les revendications 1 à 8,
**caractérisé en ce que** la glissière de guidage (203) présente :
un parcours d'extraction (217), qui est placé le long, de préférence de manière parallèle à la direction de mouvement des produits dans le parcours de transport, et sur lequel peut être effectué, à un endroit quelconque, l'extraction du produit à extraire, par le segment d'extraction (204) ;
un parcours de retour (218) sur lequel les chariots sont freinés, et sur lequel le mouvement de déplacement des chariots peut se dérouler à l'encontre du mouvement de déplacement des produits dans le parcours de transport ;
une position de repos (219) sur laquelle peuvent être successivement agencés des segments d'extraction.

10. Dispositif selon les revendications 1 à 9,
**caractérisé en ce que** :
un commutateur de proximité (530) délivre l'ordre pour la préparation d'un segment d'extraction ;
un dispositif de commande (540) détermine, à partir de la vitesse du produit à extraire dans le parcours de transport, l'accélération et la vitesse des chariots sur le parcours d'extraction.

11. Dispositif selon les revendications 1 à 10,
**caractérisé en ce qu'**un ou plusieurs segments d'extraction présentent :
la possibilité d'être déplacés sur le parcours d'extraction (217) avec la même vitesse que les produits dans le parcours de transport.

12. Procédé pour extraire des produits, notamment des contenants pour substances de remplissage, comme des bouteilles, à l'aide d'un ou de plusieurs segments d'extraction (104), dispositif
dans lequel le ou chaque segment d'extraction comprend un chariot (102) et un extracteur (101), et l'extracteur peut produire, par un débattement, l'extraction du produit, et
dans lequel le débattement de l'extracteur est produit au moyen d'une liaison mécanique, par variation de la position relative d'un deuxième chariot (102) par rapport au premier chariot, les segments d'extraction (104) étant entraînés par des moteurs linéaires.

13. Procédé selon la revendication 12, **caractérisé en ce que** l'on a une ou plusieurs des caractéristiques suivantes :
l'extraction est produite par des segments d'extraction (104) mobiles indépendamment les uns des autres ;
l'extraction d'un produit respectif est produite par exactement un segment d'extraction (104) ;
l'extraction s'effectue à partir du parcours de transport sur un ou plusieurs parcours d'extraction ;
la mise à disposition d'un ou de plusieurs segments d'extraction est produite par un commutateur de proximité (530) ;
la commande du ou des segments d'extraction (104) est produite par un dispositif de commande (540).
